# EUROPEAN PATENT SPECIFICATION

(11) **EP 4 542 935 B1**
(45) Date of publication and mention of the grant of the patent: **09.09.2026**
(21) Application number: 24218392.9
(22) Date of filing: 09.12.2024
(51) Int. Cl.: H04L 12/40

(54) **A METHOD AND APPARATUS FOR TRANSMITTING A MESSAGE**
VERFAHREN UND VORRICHTUNG ZUR ÜBERTRAGUNG EINER NACHRICHT
PROCÉDÉ ET APPAREIL DE TRANSMISSION D'UN MESSAGE

(43) Date of publication of application: 23.04.2025
(73) Proprietor: NXP B.V., 5656 AG Eindhoven (NL)
(72) Inventor: Bril, Reinder Jaap, 5612 AE Eindhoven (NL); Chan, Lu Lu, 5656 AG Eindhoven (NL); Vermeulen, Hubertus Gerardus Hendrikus, 5656 AG Eindhoven (NL); Cuijpers, Pieter Jan Laurens, 5612 AE Eindhoven (NL); Nelissen, Geoffrey Robert René Jacques, 5612 AE Eindhoven (NL)
(74) Representative: Schmütz, Christian Klaus Johannes

(56) References cited:
- US-A1- 2018 160 424
- US-A1- 2020 329 441
- US-A1- 2022 240 316

## Description

### Field

The present disclosure relates to a method and apparatus for transmitting messages onto a network, such as transmitting Ethernet frames onto a time-sensitive network.

### Background

US2022/0240316 (A1) discloses a method of transmitting data.

### Summary

The invention is defined by the appended claims. According to a first aspect of the present disclosure there is provided a method for transmitting a message onto a time-sensitive network, wherein the method comprises:
receiving messages on a plurality of different channels;
determining a time required to transmit a first received message from a first channel, *frameTime,* onto the network;
if *frameTime* is greater than a predetermined maximum time period permitted for transmission of a single message within the network, *maxlnterferenceTime;* then
   separating the first message into two or more sub-messages;
   determining a time required to transmit each sub-message onto the network; and
   if the time required to transmit each respective sub-message is less than or equal to *maxlnterferenceTime,* then sequentially transmitting each sub-message onto the network in turn such that a second message from a second channel can be transmitted between sub-messages if required.

In one or more embodiments, separating the first message into two or more sub-messages comprises applying pre-emption to the first message.

In one or more embodiments:
if *frameTime* is greater than *maxlnterferenceTime;* then
if the first message is not already preemptable, then modifying the first message such that it is preemptable before separating the first message into the two or more sub-messages.

In one or more embodiments, the method further comprises:
if the size of the first received message, *frameSize* is greater than a predetermined maximum message size for the time-sensitive network, *maxFrameSize,* then dropping the first message;
wherein the time to transmit a message having a size of *maxFrameSize* represents a longer time than *maxInterferenceTime.*

In one or more embodiments, the method further comprises:
if the *frameTime* is less than *maxInterferenceTime;* then
transmitting the first message according to a method for normal transmission selection in the time-sensitive network.

In one or more embodiments, the method further comprises:
if the first message does not support message pre-emption, then dropping the first message.

In one or more embodiments, the method further comprises:
if the time required to transmit any of the respective sub-messages is greater than *maxInterferenceTime,* then dropping the first message.

In one or more embodiments, the method further comprises:
if the time required to transmit one or more of the sub-messages is greater than or equal to *maxInterferenceTime;* then
pre-empting those one or more sub-messages into two or more sub-sub-messages;
determining a time required to transmit each sub-sub message onto the network; and
if the time required to transmit each sub-sub message onto the network is less than *maxInterferenceTime,* then sequentially transmitting each sub-sub-message and any sub-messages in turn such that a second message from a second channel can be transmitted between sub-sub-messages if required.

In one or more embodiments:
if the size of the first received message, frameSize is greater than a predetermined maximum message size for the time-sensitive network, *maxFrameSize,* wherein maxFrameSize represents a longer time than *maxlnterferenceTime,* then:
determining a minimum time until a second message on a second channel could become available for transmission, *waitTime;* and
if waitTime is greater than or equal to the difference between frameTime and maxInterferenceTime, then transmitting the first message.

In one or more embodiments,:
if the first message does not support message pre-emption, then:
determining a minimum time until a second message on a second channel could become available for transmission, *waitTime;* and
if *waitTime* is greater than or equal to the difference between *frameTime* and *maxInterferenceTime,* then transmitting the first message.

In one or more embodiments:
if the time required to transmit any of the respective sub-messages is greater than *maxInterferenceTime,* then:
determining a minimum time until a second message on a second channel could become available for transmission, *waitTime;* and
if *waitTime* is greater than or equal to the difference between *frameTime* and *maxInterferenceTime,* then transmitting the first message.

In one or more embodiments, the step of determining *waitTime* comprises:
determining when there will be sufficient credit associated with the second channel for the second message to be ready for transmission.

In one or more embodiments:
the second channel is configurable as either: i) an open channel, in which a message received on the second channel is eligible for transmitting on the time-sensitive network; or ii) a closed channel, in which a message received on the second channel is not eligible for transmitting on the time-sensitive network; and
the step of determining *waitTime* comprises:
   determining the time until the second channel will be configured as an open channel.

There is also disclosed an apparatus configured to any perform method disclosed herein.

There is also disclosed a computer program configured to perform any method disclosed herein.

While the disclosure is amenable to various modifications and alternative forms, specifics thereof have been shown by way of example in the drawings and will be described in detail. It should be understood, however, that other embodiments, beyond the particular embodiments described, are possible as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a timing diagram in which a first frame, frameX, is ready for transmission shortly before a second frame, frameY;
Figure 2 shows a timing diagram that illustrates what would happen if a frame 'frameX' from stream X, with a larger transmission time than 'maxInterferingTime' is allowed to transmit before a frame 'frameY' from stream Y;
Figure 3 shows an illustration of the 'violatingBytes' and 'violatingDuration' terms used in this document;
Figure 4 illustrates an example of an apparatus for transmitting messages onto a time-sensitive network according to an embodiment of the present disclosure;
Figure 5 shows a flowchart of a part of the normal considerations to drop a frame at the egress of a networked device such as the one shown in Figure 4 (but without the apparatus according to an embodiment of the present disclosure);
Figure 6 shows a flowchart that illustrates a method for transmitting a frame onto a time-sensitive network according to an embodiment of the present disclosure, which can be implemented by the apparatus shown in Figure 4;
Figure 7 shows a timing diagrams to illustrate an example of conditional frame pre-emption, as can be performed by the method of Figure 6;
Figure 8 illustrates the "opportunities" that are described in this document;
Figure 9 shows a flowchart that illustrates a method for transmitting a frame onto a time-sensitive network according to another embodiment of the present disclosure;
Figure 10 shows an example of a method that can be performed by an opportunity seeker according to an embodiment of the present disclosure;
Figure 11 shows an example of how the *waitTime* ('t_wait') can be determined according to an embodiment of the present disclosure; and
Figure 12 shows another example of how the *waitTime* ('t_wait') can be determined according to an embodiment of the present disclosure.

### Detailed Description

A key flow control approach in Time-Sensitive Networking (TSN) is credit-based shaping (CBS). CBS keeps track of a credit value for each traffic queue at the egress of a networked device, and limits transmissions from each traffic queue to only start when the associated credit is non-negative.

In order to configure the credit-based shapers of a TSN network, and in order to be able to guarantee upper bounds on the transmission time of a time-critical stream Y or to ensure the schedulability of similar time-critical streams, it is necessary to assume a maximum size 'maxInterferingFrameSize' on the frames any interfering stream X. While it is straightforward to use the 'maxEthernetFrameSize' as an estimate of the 'maxInterferingFrameSize', better guarantees can be given and less wasteful configurations can be made, when a smaller ' maxInterferingFrameSize' can be assumed.

In a configuration where such an assumption is made, frames from stream X that are larger than the 'maxInterferingFrameSize' need to be treated with care. Normally, such a frame would be dropped to avoid breaking the assumptions underlying the configuration or analysis. However, there are cases in which the transmission of this frame would not lead to a violation of the targeted quality of service/timing guarantees. In other words, there may be *opportunities* to transmit the frame (and thereby conserve and not waste bandwidth and data in the system), without exceeding the worst-case time they can interfere with the other time-critical streams in other queues. This scenario and the resulting opportunity that is described herein are discussed and illustrated in more detail below.

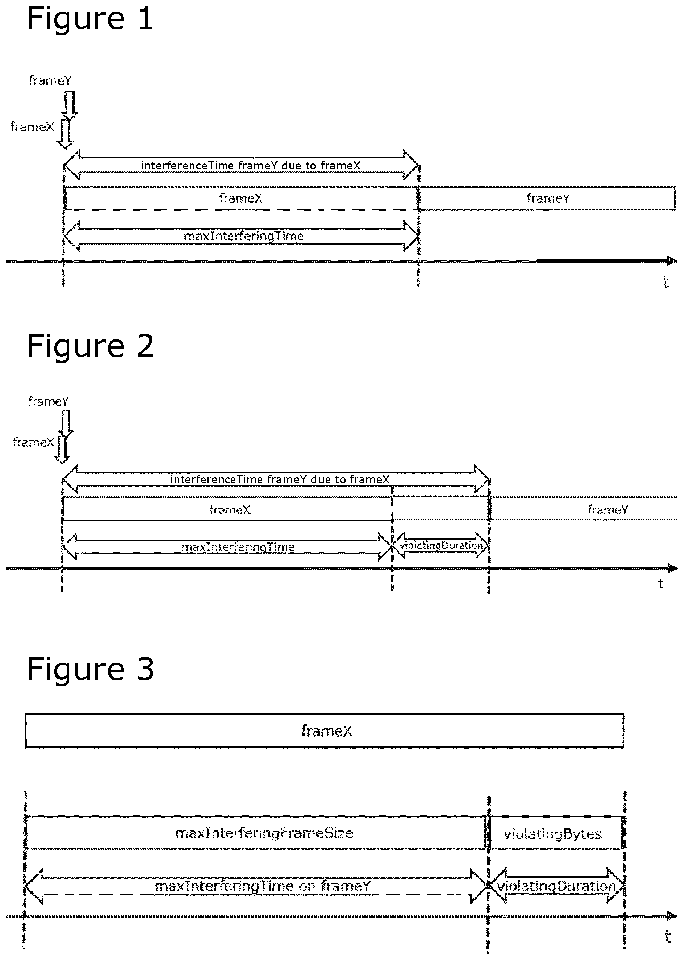

Figure 1 shows a timing diagram in which a first frame, frameX, is ready for transmission shortly before a second frame, frameY. frameX is transmitted onto the network straight away, and frameY is transmitted once the transmission of frameX has been completed. As shown in the figure, there is therefore a time between frameY being ready for transmission and it actually being transmitted onto the network. This is labelled as 'interferenceTime frameY due to frameX' in the drawing. The time-critical nature of Y leads to a requirement that this 'interferenceTime frame Y due to frameX' be smaller than a given 'maxInterferingTime'.

Figure 2 shows a timing diagram that illustrates what would happen if a frame 'frameX' from stream X, with a larger transmission time than 'maxInterferingTime' is allowed to transmit before a frame 'frameY' from stream Y. The portion of 'frameX' that extends beyond 'maxInterferingTime' is labelled as 'violatingDuration'. The portion of 'frameX' that is sent during the 'violatingDuration' can be identified as 'violatingBytes'. The actual worst-case response time (WCRT) for frames in stream Y will be (much) larger than as obtained from the WCRT analysis or during testing, possibly causing timing requirements to be violated. That is, the "interferenceTime frameY due to frameX" is greater than 'maxInterferingTime', which can be unacceptable in some applications.

Figure 3 shows an illustration of the 'violatingBytes' and 'violatingDuration' terms used in this document, referring respectively to the number of bytes a frame 'frameX' is larger than the 'maxInterferingFrameSize' value assumed during configuration of the network or used in the WCRT analysis and the corresponding transmission time of that number of bytes.

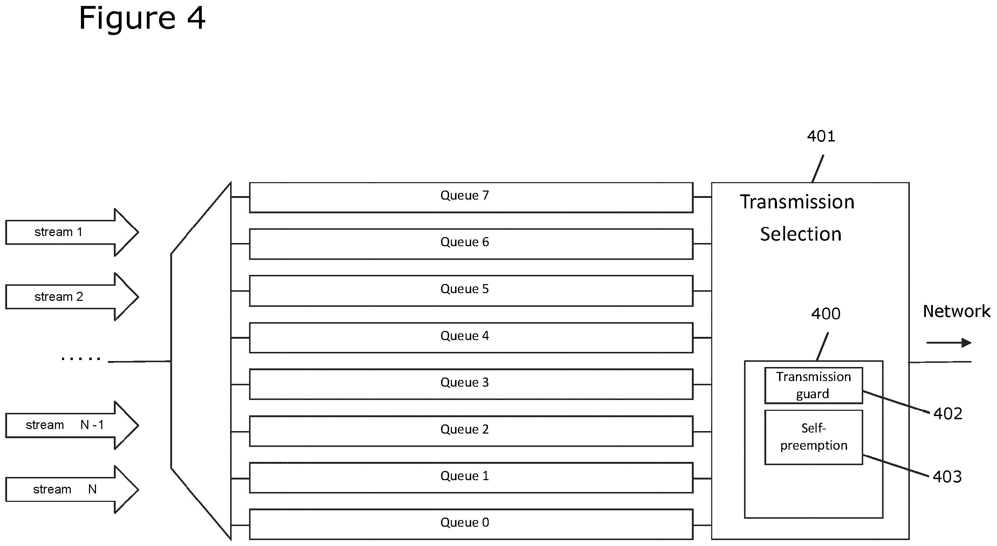

Figure 4 illustrates an example of an apparatus 400 for transmitting messages onto a time-sensitive network according to an embodiment of the present disclosure. In this example, the apparatus 400 is shown in an Ethernet MAC (medium access control) at the egress of a networked device as part of a transmission selection block 401. However, it will be appreciated that the apparatus is not limited to use with Ethernet and that it can be used with any suitable time-sensitive network.

The apparatus 400 receives messages on a plurality of different channels, which in this example will be referred to as a plurality of queues. As shown in Figure 4, in this example there are 8 queues, each of which can provide one or more messages / frames to the transmission selection block 401 for transmission onto the network. The message received from only a single queue can be transmitted onto the network at any one time.

It will be appreciated that different queues / classes /streams can have different parameters (e.g., maxInterferenceTime, max frame size). The values for various of the parameters disclosed herein can differ per queue, per class or per stream, for instance.

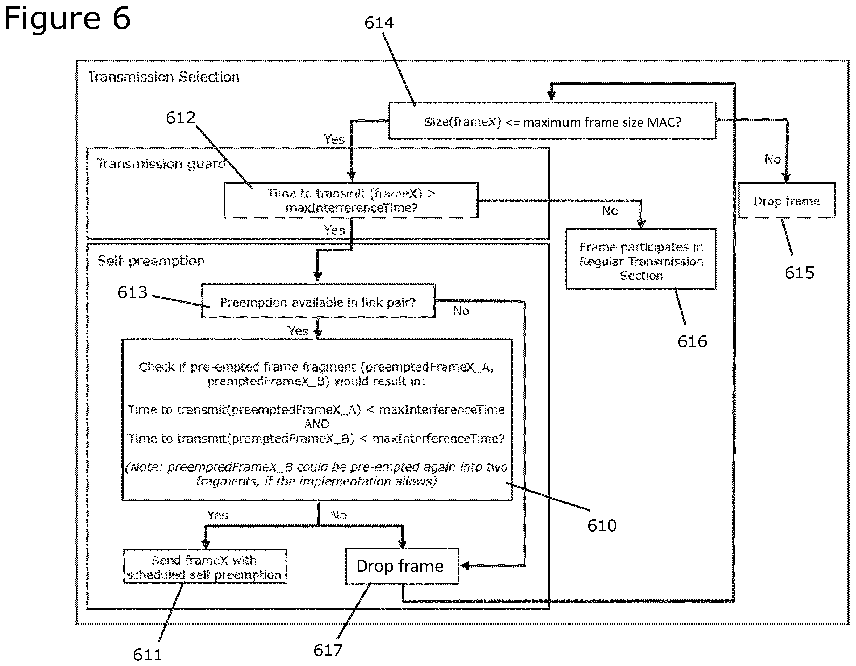

The apparatus 400 shown in Figure 4 includes a transmission guard block 402 and a self-preemption block 403. The functionality of these blocks will be described in more detail below with reference to Figure 6.

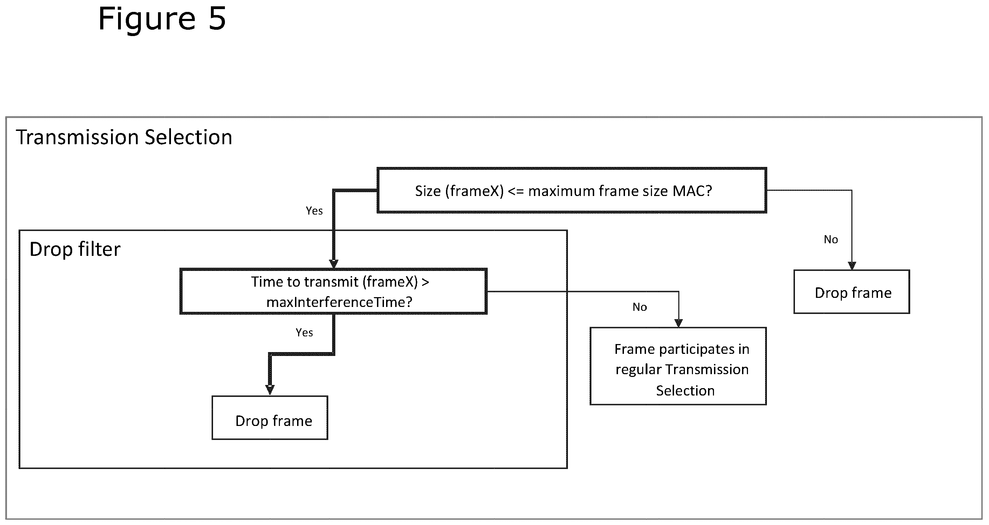

Figure 5 shows a flowchart of a part of the normal considerations to drop a frame at the egress of a networked device such as the one shown in Figure 4 (but without the apparatus 400 according to an embodiment of the present disclosure), based on a maximum frame size and / or transmission time. As can be seen from Figure 5, if the time it takes to transmit a frame (frameX) is greater than the 'maxInterferenceTime' then the frame is dropped. This can be considered as normal drop behaviour as part of the transmission selection process in, for example, an Ethernet MAC.

Figure 6 shows a flowchart that illustrates a method for transmitting a frame onto a time-sensitive network according to an embodiment of the present disclosure, which can be implemented by the apparatus shown in Figure 4. The new extensions proposed in this document, compared to the normal behavior shown in Figure 5, are shown in the Self-preemption" box in Figure 6.

The method receives messages on a plurality of different queues, such as the ones shown in Figure 6. The steps shown in Figure 6 are processing steps that are performed for a first message received from a first queue with reference to at least one other message that will subsequently be available for transmission. The subsequently available message will be referred to as a second message received on a second queue (which can be any of the queues). The second message may enter its queue after the first message is available for transmission. Alternatively, the second message may enter its queue before the first message is available for transmission, but the second message will not be available for transmission until after the first message is available for transmission.

Broadly speaking, the method of Figure 6 involves determining a time required to transmit a first received message from a first channel, *frameTime* (shown as 'Time to transmit (frameX)' in Figure 6), onto the network. If *frameTime* is greater than a predetermined maximum time period permitted for transmission of a single message within the time-sensitive network, *maxInterferenceTime;* then the method separates the message into two or more sub-messages (sub-frame_1 ... sub-frame_n). This can also be referred to as pre-empting the message or applying pre-emption to the message. In some examples, if the first message is not already preemptable, then the method includes modifying the message such that it is preemptable. This can include modifying a header of the first message, for example. This modification to make the message preemptable can be considered as an optional part of the processing that is performed at step 613.

The method then determines a time required to transmit each sub-message (sub-frame_1Time ... sub-frame_nTime) onto the network. This is performed at step 610 in Figure 6. If the time required to transmit each respective sub-message is less than or equal to *maxInterferenceTime,* then the method sequentially transmits each sub-message onto the network in turn. This is shown as step 611 in Figure 6 and can also be referred to as sending the message / frame with scheduled self-preemption. In this way, as will be discussed in more detail below, a second message from a second channel can be transmitted between sub-messages if required.

We will now step through the method of Figure 6 in detail. The method is performed following a message on one of the queues becoming available / eligible for transmission. We will refer to this message as a first message that is on a first one of the plurality of queues, to distinguish it from a message (a second message) that subsequently becomes available for transmission on one of the other queues. The "first" queue in this context is the one that is associated with the message that we will refer to as the first message; it can be any one of the plurality of queues and is not necessarily "Queue 0" shown in Figure 4. One or both of the following parameters can be used to represent the first message: *frameTime* and *frameSize. frameTime* represents the length of time that it will take to transmit the first message. *frameSize* represents the size of the first message, for example in bits or bytes.

The method of Figure 6 begins at step 614 by comparing *frameSize* with a predetermined maximum message size for the time-sensitive network, *maxFrameSize* (which is shown in Figure 6 as 'maximum frame size MAC'). *maxFrameSize* ('maximum frame size MAC') corresponds to a longer time than *maxlnterferenceTime. maxFrameSize* ('maximum frame size MAC') represents the maximum message / frame size that can be handled by the network. *maxlnterferenceTime* represents a maximum acceptable delay between a message / frame being available for transmission and actually being transmitted. *maxInterferenceTime* is especially important for high priority messages or messages with timing requirements such that they are not delayed by too much. If *frameTime* ('SizeFrameX') is greater than *maxFrameSize* ('maximum frame size MAC') then the method drops the first message at step 615. That is, the first message is not transmitted because it is too big for the network.

If *frameSize* ('SizeFrameX') is not greater than *maxFrameSize* ('maximum frame size MAC') then the method moves on to step 612.

At step 612, *frameTime* ('Time to transmit (frameX)') of the first message is compared with *maxInterferenceTime.* If *frameTime* ('Time to transmit (frameX)') is not greater than *maxInterferenceTime,* then the method moves to step 616, whereby the first message is processed such that it participates in regular transmission selection. That is, the first message is transmitted according to a method for normal transmission selection in the time-sensitive network. If *frameTime* ('Time to transmit (frameX)') is greater than *maxInterferenceTime,* then the method moves to step 613 whereby the method will determine if self-preemption can be applied to the first message such that it can be sent in multiple parts without contravening the *maxlnterferenceTime* for any second messages that subsequently become available for transmission.

At step 613, the method checks if the TX-RX link pair is capable of frame preemption according to IEEE802.3br (i.e. both sides having a preemptableMAC). If the link is preemption capable, then it checks if the first message is a preemptable frame. If it is not, then the method drops the first message at step 617. This is because it would be considered unacceptable to begin transmitting the first message because the delay before another message could be transmitted would contravene the *maxInterferenceTime.* Optionally, instead of moving straight to step 617 to drop the frame, the method at step 613 can try to modify the first message to make it preemptable. If this is not successful, then the method moves on to step 617. If it is successful, then the method moves on to step 610.

If, at step 613, the method determines that the first message could support pre-emption (based on its own (lack of) timing requirements), but is not currently configured to be preemptable, such as sorted in a preemptable queue, then the method can check whether there is an opportunity (such as, if it is best effort traffic) to modify the configuration of the first message such that it is preemptable. It will be appreciated that a preemptable message comprises two or more sub-messages that can be transmitted on to the network separately to each other, but still in the correct order. However, the sub-messages do not have to be transmitted directly sequentially one after the other; they can have an express frame (specifically frameY) transmission in between.

If the first message is already preemptable or if it has been modified such that it is preemptable, then the method moves on to step 610.

At step 610, the method determines if the time required to transmit any of the respective sub-messages of the first message is greater than *maxlnterferenceTime.* If it is not, then the method moves on to step 617 to drop or delay the first message in the same way that is discussed above.

In some examples, an initial pre-emption step may split the first message into a plurality of sub-messages. Then, the method may determine if the time required to transmit one or more of the sub-messages is greater than or equal to *maxInterferenceTime.* If it is, then instead of immediately dropping the first message, the method may instead apply pre-emption to those one or more sub-messages such that they are split into two or more sub-sub-messages. The method can then determine a time required to transmit each sub-sub message onto the network. If the time required to transmit each sub-sub message onto the network is less than *maxInterferenceTime,* then the method can sequentially transmit each sub-sub-message and any sub-messages in turn. It will be appreciated that this nested processing can be performed to as many levels as is appropriate to satisfy the *maxInterferenceTime* or as is permissible for by the first message. In this way, any second messages from a second channel can be transmitted between sub-sub-messages if required.

If it is determined that the time to transmit each and all sub-messages (and sub-sub-messages, etc., if there are any) for the first message is less than *maxlnterferenceTime,* then the method moves on to step 611 where each sub-message is sequentially transmitting onto the network in turn.

At step 617, the method can either: wait for a period of time and then return to step 614, or it can drop the frame. However, in another example, the method can wait for a period of time and then return to step 613 because it may be considered unnecessary to repeat steps 614 and 612. In some implementations, if the method repeats the loop via step 617 a predetermined number of times in a row, without being able to send the first message, or if a time-out expires then the first message is dropped.

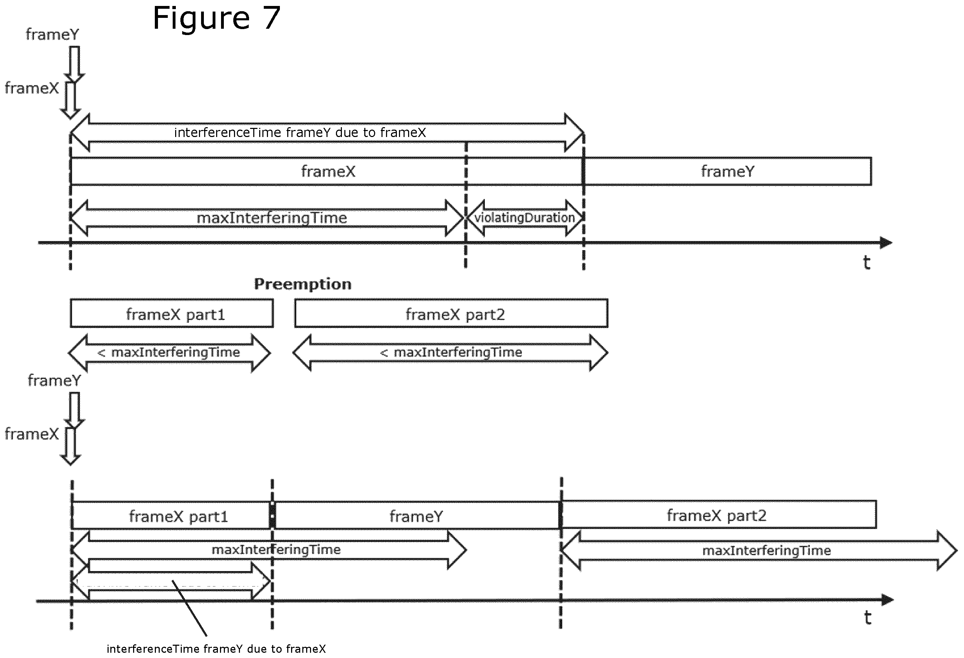

Figure 7 shows a timing diagrams to illustrate an example of conditional frame pre-emption, as can be performed by the method of Figure 6.

Frame X is the first message, and frame Y is the second message.

As can be seen from the upper plot in Figure 7, if frame X were transmitted in its entirety as a single transmission then there would be an unacceptable delay before frame Y could be transmitted. This is labelled as 'interferenceTime frame Y due to frame X' in Figure 7 and is longer than *maxInterferenceTime.* Therefore, there is a *violatingDuration.*

The middle part of Figure 7 shows that frame X can be split into two sub-messages *(frameX part 1* and *frameX part 2),* each of which has a duration that is less than *maxInterferenceTime.* It will be understood that the split ensures that frameX part 1 has a transmission duration that is less than *maxlnterferenceTime.* This splitting process can be repeated for frameX part 2, so that it is also split into sub-messages, whose transmission duration is less than *maxInterferenceTime.*

The lower plot shows that the first sub-message (*frameX part 1)* can be initially transmitted. Then, before the second sub-message *(frameX part 2)* is transmitted a subsequently received second message *(frame* Y) can be transmitted. In this way, the second message *(frame* Y) can be transmitted without having to wait for longer than *maxInterferenceTime.*

In this way, if a frame that is too large fits the criteria to be pre-empted according to IEEE802.1Qbu + IEEE802.3br, and both the initial and continuation fragments of the preemptable packet fit within the duration *maxlnterferenceTime,* then the offending frame 'frameX' may be transmitted with a pre-emption on itself after the transmission of a first fragment, to then allow the transmission of frame 'frameY', and thereby still adhere to the *maxInterferenceTime* constraint.

This is a different trigger for pre-emption than what is currently covered by the standards (i.e. express frame availability or IEEE802.1Qbv schedule indication), and the *maxInterferenceTime* constraint is an additional limitation parameter on the mPacket fragment size next to the minimal number of octets for the mPackets.

Examples disclosed herein can trigger a pre-emption by the transmission guard 402 that is shown in Figure 4.

We will now describe an embodiment where additional functionality, that we will refer to as opportunity seeking, can be added to the self pre-emption of Figure 6. As will be appreciated from the description above, self pre-emption divides the transmission of a message in a sequence of sub-messages. This opportunity seeking is relevant to frames (or sub-frames) that are larger than 'maxInterferingFrameSize'. If the transmission of the frame / sub-frame would not exceed the corresponding queue's reserved bandwidth bounds, i.e., the associated stream queue has a positive credit, then there may still be an opportunity to transmit the frame / sub-frame (and thereby conserve and not waste bandwidth and data in the system), without exceeding the worst-case time they can interfere with the other time-critical streams in other queues. This scenario and the resulting opportunity that is described herein are discussed and illustrated in more detail below.

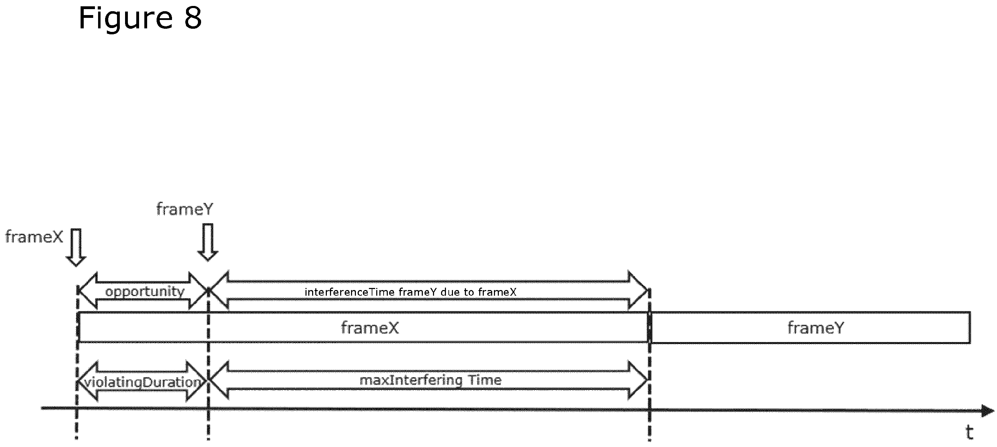

Figure 8 illustrates the "opportunities" that are described in this document. As will be discussed below, this can be based on the knowledge from all shaper configurations and queue states at the egress of a networked device, there may exist an opportunity to still transmit (and not drop) a frame 'frameX' of stream X that has a larger transmission time 'maxInterferingTime + violatingDuration' than the 'maxInterferingTime' time assumed in the WCRT analysis. That is, the "opportunity" that is labelled in Figure 8 represents a period of time, which would otherwise not be utilised, that can be used to extend the available time for sending a frameX that is longer than 'maxInterferingTime' without resulting in too long a delay between frameY being ready for transmission and it actually being transmitted. In this way, 'interferenceTime frameY due to frameX" is still less than 'maxInterferingTime'.

The following examples can use this opportunity to help conserve and not waste available bandwidth and data in a time-sensitive network.

Examples disclosed herein can enhance the Credit-Based Shaper (CBS) of IEEE 802.1 Ethernet Time Sensitive Networks (TSN), to have cost-effective reservations, where allocated budgets are both guaranteed and enforced, preventing over-provisioning, whilst maintaining inter-priority class robustness through judicious enforcement. Such methods are both an enforcement mechanism and an opportunity seeker.

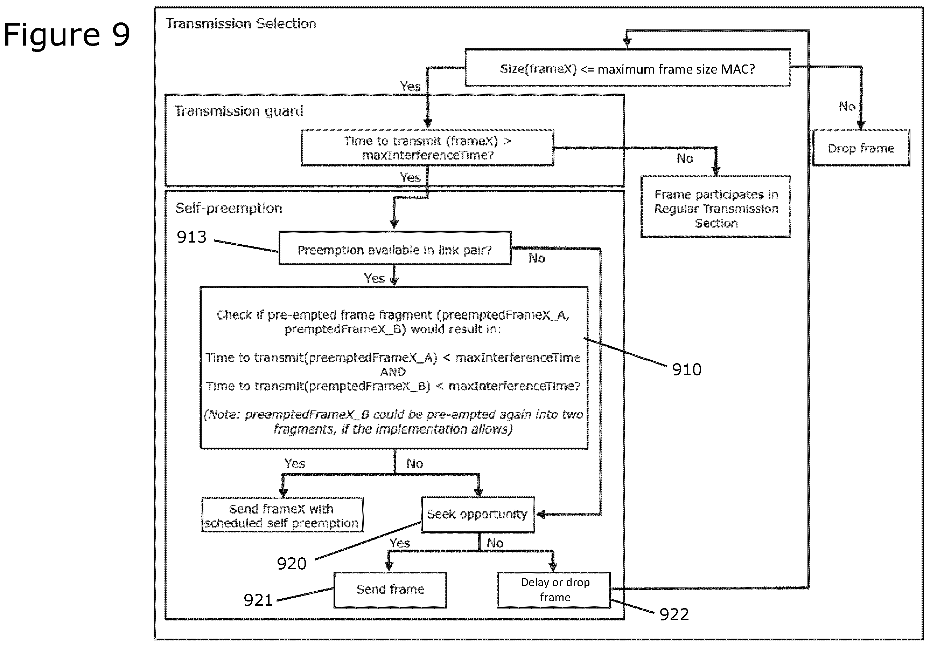

Figure 9 shows a flowchart that illustrates a method for transmitting a frame onto a time-sensitive network according to another embodiment of the present disclosure. Features of Figure 9 that are also shown in Figure 6 will not be described again here.

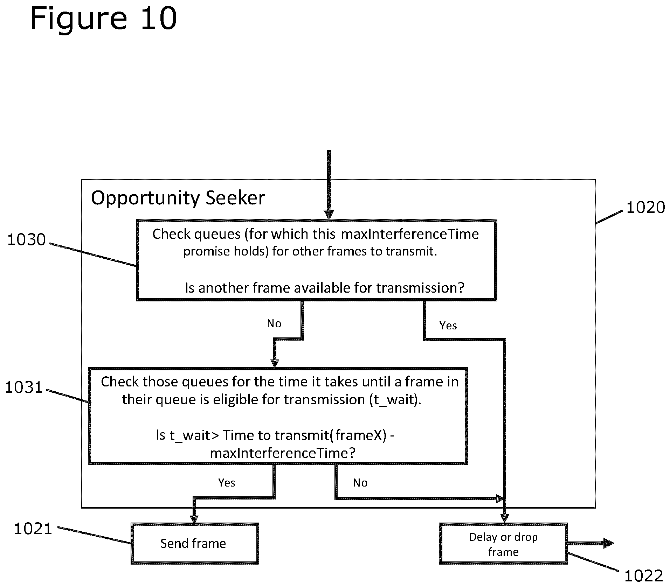

In this example, instead of dropping the message at step 617 in Figure 6, there is an additional step of looking for an opportunity to send the first message or sub-message that is longer than *maxInterferenceTime* at step 920. Further details of the processing that is performed at step 920 are provided below with reference to Figure 10.

At step 913, the method checks if the first message is already preemptable and / or if it supports message pre-emption. If it does not, then the method moves to step 920 to seek an opportunity to send the first message anyway, without contravening *maxInterferenceTime.*

At step 910, the method determines if the time required to transmit any of the respective sub-messages of the first message is greater than *maxlnterferenceTime.* If it is not then, instead of dropping the first message as is the case with Figure 6, the method moves on to step 920 to look for an opportunity to send the sub-message anyway.

If it is determined at step 920 that there is an opportunity to send the message / sub-message anyway, then the method moves on to step 921 to send the message / sub-message. If it is determined at step 920 that there is not an opportunity to send the message / sub-message, then the method moves on to step 922 where the message / sub-message can be dropped or delayed.

Figure 10 shows an example of a method that can be performed by an opportunity seeker 1020 according to an embodiment of the present disclosure. The opportunity seeker 1020 can perform the functionality that is represented by step 920 in Figure 9. The following description relates to processing a received first message. It will be appreciated that the same processing can be performed for a received sub-message.

Broadly speaking, the method of Figure 10 involves determining a time required to transmit the first received message from a first channel, *frameTime,* onto the network. If *frameTime* is greater than a predetermined maximum time period permitted for transmission of a single message within the network, *maxInterferenceTime,* then the method determines a minimum time until a second message on a second channel could become available for transmission, *waitTime* (shown as 't_wait' in Figure 10). The *maxlnterferenceTime* can be considered as a predetermined maximum time period permitted for transmission of a single message within the network that impacts the time until start of transmission of another message. Examples of how *waitTime* can be determined will be described below. If *waitTime ('t_wait')* is greater than or equal to the difference between *frameTime* and *maxlnterferenceTime* ('Time to transmit(frameX)' - 'maxInterferenceTime') then the method begins transmitting the first message at step 1021.

We will now step through the method of Figure 10 in detail. At step 1030, the method checks the other queues to determine if another message is available for transmission. If it is, then it would be considered unacceptable to begin transmitting the first message because the delay before that other message could be transmitted would contravene the *maxInterferenceTime.* Therefore, if another message is available for transmission then the method moves on to step 1022 in order to drop or delay the first message. This functionality has been discussed in detail above.

If it is determined at step 1030 that another message is not available for transmission then the method moves on to step 1031. At step 1031, the method determines a minimum time until a second message on a second channel (i.e., in another queue) could become available / eligible for transmission, *waitTime* ('t_wait'). In some examples, the method can determine the time until a received message on each of the other channels will be available for transmission, and then allocate the shortest one as *waitTime* ('t_wait') and identify the associated channel as the second channel. If *waitTime* ('t_wait') is greater than or equal to the difference between *frameTime* and *maxInterferenceTime* ('Time to transmit(frameX)' - 'maxInterferenceTime'), then the method begins transmitting the first message at step 1021. That is, an opportunity has been identified that permits the first message to be transmitted without any subsequently received messages having to wait for longer than the *maxInterferenceTime* before they can be transmitted.

If *waitTime* ('t_wait') is not greater than or equal to the difference between *frameTime* and *maxInterferenceTime* ('Time to transmit(frameX)' - 'maxInterferenceTime') then the method moves on to step 1022. Step 1022 is discussed above.

In this way, the transmission guard of Figure 10 can check the configuration and status of all available egress queues and detect and select an opportunity to transmit a frame in a way that does not conflict with a configurable 'maxInterferenceTime'.

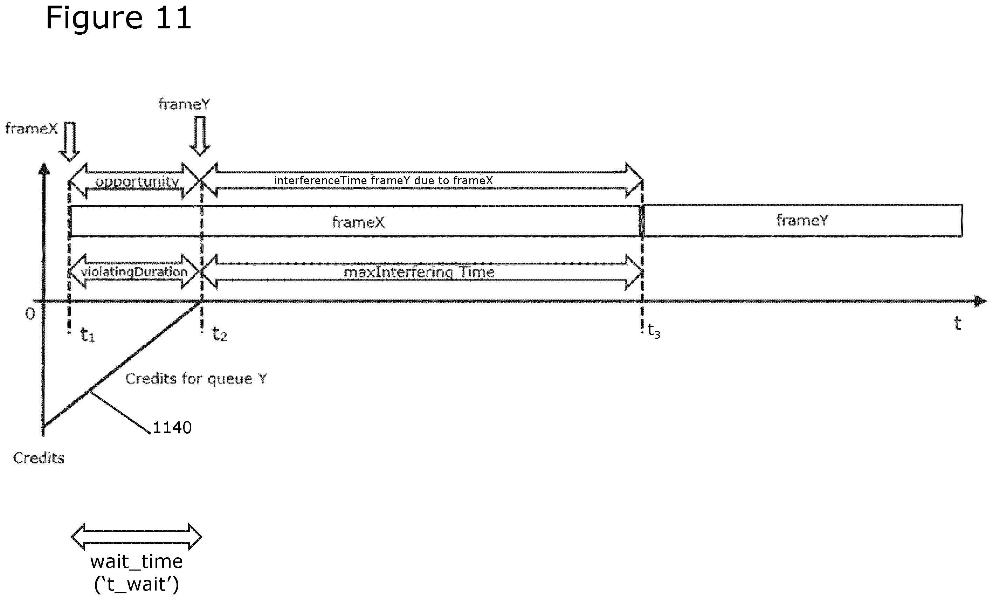

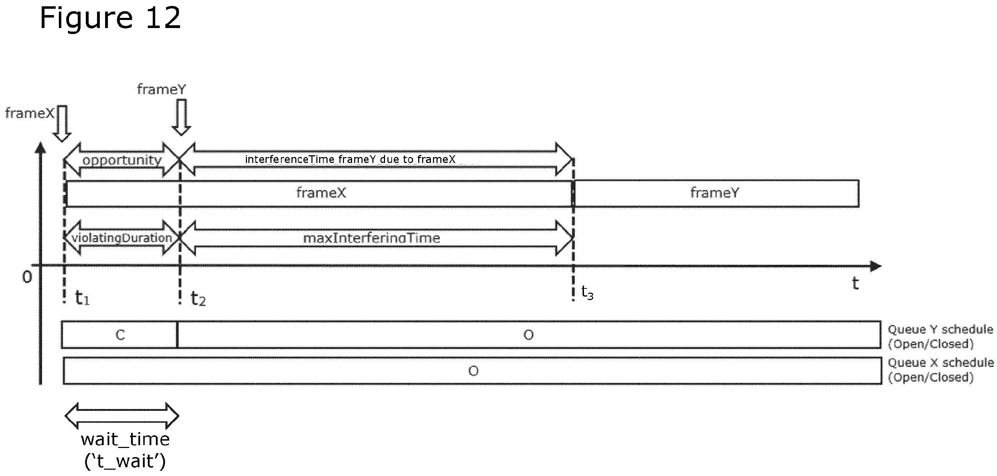

Figures 11 and 12 will be used to describe examples of how the method can determine the minimum time until a second message on a second channel could become available for transmission, *(waitTime,* 't_wait'). It will be appreciated that it is a "minimum" because it is possible that there will not actually be a second message on the second queue when it becomes eligible for transmitting a message, in which case the actual time until a second message is eligible for transmission on the second channel could be longer than the minimum.

Figure 11 shows an example of how the *waitTime* ('t_wait') is determined by determining when there will be sufficient credit associated with the second channel for the second message to be ready for transmission. In this example, the first queue is labeled as queue X and the second queue is labeled as queue Y. Figure 11 also shows a plot 1140 of available credit for queue Y. When the available credits are negative for queue Y, queue Y is prohibited from providing a message that is to be transmitted on the network. For example, after queue Y sends a message onto the network, queue Y may be locked out from sending another message onto the network for a period of time. In this example, this is implemented by attributing a negative credit to queue Y after it has sent a message and then gradually reducing the magnitude of that negative credit over time. Once the credit has reached zero, queue Y is again eligible for providing a message that can be sent onto the network.

Therefore, as shown in Figure 11, negative credit information in queue Y can provide an opportunity for an oversized frame 'frameX' in queue X to be transmitted without breaking the 'maxInterferenceTime' constraint on stream X to protect stream Y, which would only start from the time the other queue X would have been able to transmit.

More particularly, at time t₁ in Figure 11, frame 'frameX' is eligible for transmission. It does have a larger frame size than 'maxInterferingSize' though, which normally would cause this frame to be dropped. However, queue Y does not have enough credits yet to make frame 'frameY' eligible for transmission. By observing the credit level and CBS (credit-based shaping) configuration of queue Y, the opportunity seeker can calculate that by the time queue Y does have enough credits to transmit frame 'frameY', i.e., at time t₂, the remaining transmission time of frame 'frameX' will not exceed the 'maxInterferenceTime' bound imposed on it by the WCRT analysis. As such, the opportunity seeker allows frame 'frameX' to start its transmission at time t₁.

Figure 11 represents an example of an opportunity created by a lack of credits for the transmission of frame 'frameY', which allows frame 'frameX' to be transmitted, without contravening a maximum interfering time *maxInterferenceTime.*

Figure 12 shows another example of how the *waitTime* ('t_wait') can be determined. In this example, (at least) the second channel can be configured as either: i) an open channel, in which a message received on the second channel is eligible for transmitting on to the time-sensitive network; and ii) a closed channel, in which a message received on the second channel is not eligible for transmitting on to the time-sensitive network. This is another mechanism for locking out a channel when it has a message that is to be sent onto the network. Indicators of whether queue X and queue Y are open or closed are provided in the lower region of Figure 12.

In this example, the step of determining the *waitTime* ('t_wait') is performed by determining the time until the second channel will be configured as an open channel (that is, until it is no longer configured as a closed channel). This is identified in the drawing as the opportunity while queue Y is configured as a closed channel.

The example of Figure 12 is consistent with a time-aware shaper (TAS) schedule as defined in IEEE802.1Qbv, which can indicate that an open slot closes soon and no valid Ethernet frames in that queue may be transmitted even if one is or becomes available in that queue. If that duration and the closed duration of that queue is enough to negate the amount of transmission time the offending frame would exceed the *maxInterferenceTime,* then the offending frame may be allowed to transmit during that window.

More particularly with reference to Figure 12, at time t₁ frame 'frameX' is eligible for transmission. It does have a larger frame size than 'maxInterferingSize' though, which normally would cause this frame to be dropped. However, the gate of queue Y is not yet open, preventing frame 'frameY' from being eligible for transmission. By observing the time-aware shaper configuration of queue Y, the opportunity seeker can determine that the gate of queue Y will open at time t₂, making frame 'frameY' eligible at that time, and that at that time t₂ the remaining transmission time of frame 'frameX' will not exceed the 'maxInterferenceTime' bound imposed on it by the WCRT analysis. As such, the opportunity seeker allows frame 'frameX' to start its transmission at time t₁.

The examples disclosed herein can be implemented as part of a transmission selection module in an Ethernet MAC, such as the one shown in Figure 4. The concept of the logic of the above examples, the "Transmission Guard and Opportunity Seeker", are depicted in Figure 9. Beneficially, these examples do not target to sacrifice other streams, such as best effort, for the benefit of reserved flows. Rather, they try to find opportunities where a violating frame can still be transmitted without additional impact on other flows.

When the opportunity seeker determines that at time t₁ it is not possible to transmit frame 'frameX', it may optionally delay the transmission of this frame to a later point in time. Known mechanisms, such as a first-in, first-out queue with an optional expiration time can be used to manage this backlog of oversized frames.

In one or more of the examples disclosed herein, the allocated budget is not only in the form of the traditional credits in a CBS, but can additionally utilise the maximum interference time that frame transmission from a credit-based shaped queue can have on frame response times in other queues (refer to Figure 4). The transmission guard can prevent the transmission beyond its allowed maximum interference time (maxInterferenceTime), that could be defined in the form of a maximum size limit for a frame, while still allowing frames that are larger than this limit to be transmitted, as long as the guarantees to (other) priority classes under CBS are not jeopardized. This allowance can be achieved in multiple ways, e.g. by
- a conditional frame delay, and / or
- conditional frame pre-emption.

Independent (yet tight) worst-case response time analysis for individual priority classes under credit-based shaping (CBS) can be used in Ethernet AVB based on so-called eligible intervals. This real-time analysis does not rely on any assumptions on interfering inter-priority streams other than those enforced by the Ethernet standard. A major advantage of independent analysis that is disclosed herein is that CBS may be viewed as resource reservation, where allocated bandwidth is both guaranteed and enforced.

Such independent analysis can come at a cost of over-provisioning. However, assuming knowledge of inter-priority streams may jeopardize the robustness of the system, because calculated worst-case response times of streams of a class can no longer bound response times in case streams of other classes do not satisfy assumptions, and deadlines may therefore be missed.

In this document, we present a method of enhancing CBS to cost-effective reservations, preventing over-provisioning whilst maintaining robustness through judicious enforcement.

Resource reservation is a known paradigm for real-time systems that works well under a wide range of conditions. The independent (yet tight) worst-case response time analysis can also be viewed as an application of this paradigm, albeit without a (specific) mechanism for enforcement.

The Ethernet standard allows unconditional skipping (or dropping) of frames that are too large through the IEEE802.1Qci 'Per-stream filtering and policing' mechanism. Examples of the apparatus disclosed herein can allow conditional transmission of frames that are too large depending on the state of the switch (e.g., credit levels).

The Ethernet standard allows frame preemption. In this document, we propose to use this mechanism as well, albeit for another purpose. In contrast to delaying frames of an entire stream or class (e.g., in combination with guard bands and time-aware shapers (TAS)), using an individual frame delay, as proposed as an alternative mechanism to frame preemption when agreed upon frame sizes are exceeded is novel.

The IEEE802.1Qbv Time aware shaping standard defines a dynamic transmission guard, which does not allow a frame to transmit if it does not finish before the queue closes. However, examples disclosed herein actively try to find *opportunities* to still transmit the offending frame, whereas in a TAS schedule, it should fit in a next open slot, otherwise the system was configured incorrectly and the offending frame will never be transmitted.

Also, the IEEE802.1Q related standards specify different interactions between shaping / frame selection mechanisms such as Credit-Based Shaper, Time-Aware Shaper and Frame Preemption, that a frame is not allowed to be selected for transmission when among others its queue does not have enough credits (CBS), its queue is closed or will be closed too soon for full frame transmission (TAS), or the resulting fragment sizes are too small (FP). This may cause the selection for transmission of a frame, which is available in another queue. In examples of the present disclosure, we seek an *opportunity* to still transmit a particular frame by considering all queue states and their shaper configurations and states, to prevent having to drop it.

Examples disclosed herein relate to enhancing CBS of Ethernet TSN towards cost-effective reservations. The proposed transmission guard and opportunity seeker allows the conditional transmission of frames that are too large depending on the state of all queues and their shaper configurations and states (e.g., credit levels).

Examples of the present disclosure are particularly suitable for Ethernet TSN enabled switches and network end nodes with CBS support. They are equally well applicable in other contexts where:
- guarantees can be provided to 'entities' (such as frames) when these entities comply to the maximum sizes enforced by a standard;
- maximum sizes are assumed to be smaller than those enforced by a standard, but these assumed sizes are not enforced;
- exceeding those assumed maximum sizes by entities may jeopardize the guarantees of other entities;
- a 'guard' is used to detect whether or not the guarantee of other entities may be jeopardized;
- the guard is used in combination with additional mechanisms for both judicious enforcement and conditional handling of 'entities' (such as transmission of frames).

While examples disclosed herein primarily target credit based queues, it can essentially be applied to any stream that an analysis or a configuration step has taken into account and assumed a specific maximum size of, that translates to a maximum interference time on other streams.

Examples of the present disclosure are not meant to be applied to frames that are too large for the MAC to transmit, or where the maximum frame size is not set simply for the reason of impact on other streams.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A method for transmitting a message onto a time-sensitive network, wherein the method comprises:
receiving messages on a plurality of different queues, wherein a message received from only a single queue can be transmitted onto the network at any one time;
determining a time required to transmit a first received message from a first queue, *frameTime,* onto the network;
**characterized in that** if (612, 614) *frameTime* is greater than a predetermined maximum time period permitted for transmission of a single message within the network, *maxInterferenceTime*; then
separating the first message into two or more sub-messages;
determining a time required to transmit each sub-message onto the network; and
if (610) the time required to transmit each respective sub-message is less than or equal to *maxlnterferenceTime,* then sequentially transmitting (611) each sub-message onto the network in turn such that a second message from a second queue can be transmitted between sub-messages if required.

2. The method of claim 1, wherein separating the first message into two or more sub-messages comprises applying pre-emption to the first message.

3. The method of claim 1 or claim 2, wherein:
if *frameTime* is greater than *maxlnterferenceTime;* then
if the first message is not already preemptable, then modifying the first message such that it is preemptable before separating the first message into the two or more sub-messages.

4. The method of any preceding claim, wherein the method further comprises:
if the size of the first received message, *frameSize* is greater than a predetermined maximum message size for the time-sensitive network, *maxFrameSize,* then dropping the first message;
wherein the time to transmit a message having a size of *maxFrameSize* represents a longer time than *maxInterferenceTime.*

5. The method of any preceding claim, wherein the method further comprises:
if the *frameTime* is less than *maxInterferenceTime;* then
transmitting the first message according to a method for normal transmission selection in the time-sensitive network.

6. The method of any preceding claim, wherein the method further comprises:
if the first message does not support message pre-emption, then dropping the first message.

7. The method of any preceding claim, wherein the method further comprises:
if the time required to transmit any of the respective sub-messages is greater than *maxInterferenceTime,* then dropping the first message.

8. The method of any preceding claim, wherein the method further comprises:
if the time required to transmit one or more of the sub-messages is greater than or equal to *maxInterferenceTime;* then
pre-empting those one or more sub-messages into two or more sub-sub-messages;
determining a time required to transmit each sub-sub message onto the network; and
if the time required to transmit each sub-sub message onto the network is less than *maxInterferenceTime,* then sequentially transmitting each sub-sub-message and any sub-messages in turn such that a second message from a second queue can be transmitted between sub-sub-messages if required.

9. The method of claim 1, wherein:
if the size of the first received message, frameSize is greater than a predetermined maximum message size for the time-sensitive network, *maxFrameSize,* wherein the time to transmit a message having a size of maxFrameSize represents a longer time than *maxInterferenceTime,* then:
determining a minimum time until a second message on a second queue could become available for transmission, *waitTime;* and
if waitTime is greater than or equal to the difference between frameTime and maxInterferenceTime, then transmitting the first message.

10. The method of claim 1, wherein:
if the first message does not support message pre-emption, then:
determining a minimum time until a second message on a second queue could become available for transmission, *waitTime;* and
if *waitTime* is greater than or equal to the difference between *frameTime* and *maxInterferenceTime,* then transmitting the first message.

11. The method of claim 1, wherein:
if the time required to transmit any of the respective sub-messages is greater than *maxInterferenceTime,* then:
determining a minimum time until a second message on a second queue could become available for transmission, *waitTime;* and
if *waitTime* is greater than or equal to the difference between *frameTime* and *maxInterferenceTime,* then transmitting the first message.

12. The method of any one of claims 9 to 11, wherein the step of determining *waitTime* comprises:
determining when there will be sufficient credit associated with the second queue for the second message to be ready for transmission.

13. The method of any one of claims 9 to 11, wherein:
the second queue is configurable as either: i) an open queue, in which a message received on the second queue is eligible for transmitting on the time-sensitive network; or ii) a closed queue, in which a message received on the second queue is not eligible for transmitting on the time-sensitive network; and
the step of determining *waitTime* comprises:
determining the time until the second queue will be configured as an open queue.

14. Apparatus comprising means configured
to perform the method of any preceding claim.

15. A computer program configured to perform the method of any one of claims 1 to 13 when the program is executed in the processor of a computer.

## Patentansprüche

1. Verfahren zur Übertragung einer Nachricht an ein zeitkritisches Netzwerk, wobei das Verfahren Folgendes umfasst:
Empfangen von Nachrichten in einer Mehrzahl von unterschiedlichen Warteschlangen, wobei eine Nachricht, die aus nur einer einzigen Warteschlange empfangen wird, zu einem gegebenen Zeitpunkt an das Netzwerk übertragen werden kann;
Bestimmen einer Zeit, frameTime, die erforderlich ist, um eine erste empfangene Nachricht aus einer ersten Warteschlange an das Netzwerk zu übertragen;
**dadurch gekennzeichnet, dass**, falls (612, 614) frameTime größer ist als eine vorbestimmte maximale Zeitdauer, maxInterferenceTime, die für die Übertragung einer einzelnen Nachricht innerhalb des Netzwerks zulässig ist, dann
die erste Nachricht in zwei oder mehr Unternachrichten getrennt wird;
eine Zeit bestimmt wird, die erforderlich ist, um jede Unternachricht an das Netzwerk zu übertragen; und,
falls (610) die Zeit, die zum Übertragen jeder jeweiligen Unternachricht erforderlich ist, kleiner oder gleich maxInterferenceTime ist, dann jede Unternachricht der Reihe nach sequenziell so an das Netzwerk übertragen (611) wird, dass eine zweite Nachricht aus einer zweiten Warteschlange zwischen Unternachrichten übertragen werden kann, falls erforderlich.

2. Verfahren nach Anspruch 1, wobei das Trennen der ersten Nachricht in zwei oder mehr Unternachrichten Anwenden einer Unterbrechung auf die erste Nachricht umfasst.

3. Verfahren nach Anspruch 1 oder 2, wobei:
falls frameTime größer ist als maxInterferenceTime, dann, falls die erste Nachricht noch nicht unterbrechbar ist, dann die erste Nachricht so modifiziert wird, dass sie unterbrechbar ist, bevor die erste Nachricht in die zwei oder mehr Unternachrichten getrennt wird.

4. Verfahren nach einem der vorhergehenden Ansprüche, wobei das Verfahren ferner Folgendes umfasst:
falls die Größe der ersten empfangenen Nachricht, frameSize, größer ist als eine vorbestimmte maximale Nachrichtengröße, maxFrameSize, für das zeitkritische Netzwerk, dann Verwerfen der ersten Nachricht;
wobei die Zeit zum Übertragen einer Nachricht mit einer Größe von maxFrameSize eine längere Zeit darstellt als maxInterferenceTime.

5. Verfahren nach einem der vorhergehenden Ansprüche, wobei das Verfahren ferner Folgendes umfasst:
falls die frameTime kleiner ist als maxInterferenceTime, dann
Übertragen der ersten Nachricht gemäß einem Verfahren zur normalen Übertragungsauswahl in dem zeitkritischen Netzwerk.

6. Verfahren nach einem der vorhergehenden Ansprüche, wobei das Verfahren ferner Folgendes umfasst:
falls die erste Nachricht Nachrichtenunterbrechung nicht unterstützt, dann Verwerfen der ersten Nachricht.

7. Verfahren nach einem der vorhergehenden Ansprüche, wobei das Verfahren ferner Folgendes umfasst:
falls die Zeit, die zum Übertragen einer der jeweiligen Unternachrichten erforderlich ist, größer ist als maxInterferenceTime, dann Verwerfen der ersten Nachricht.

8. Verfahren nach einem der vorhergehenden Ansprüche, wobei das Verfahren ferner Folgendes umfasst:
falls die Zeit, die zum Übertragen einer oder mehrerer der Unternachrichten erforderlich ist, größer oder gleich maxInterferenceTime ist, dann
Unterbrechen dieser einen oder mehreren Unternachrichten in zwei oder mehr Unter-Unternachrichten;
Bestimmen einer Zeit, die zum Übertragen jeder Unter-Unternachricht an das Netzwerk erforderlich ist; und,
falls die Zeit, die erforderlich ist, um jede Unter-Unternachricht an das Netzwerk zu übertragen, kleiner ist als maxInterferenceTime, dann sequenzielles Übertragen jeder Unter-Unternachricht und beliebiger Unternachrichten der Reihe nach so, dass eine zweite Nachricht aus einer zweiten Warteschlange zwischen Unter-Unternachrichten übertragen werden kann, falls erforderlich.

9. Verfahren nach Anspruch 1, wobei:
falls die Größe der ersten empfangenen Nachricht, frameSize, größer ist als eine vorbestimmte maximale Nachrichtengröße, maxFrameSize, für das zeitkritische Netzwerk, wobei die Zeit zum Übertragen einer Nachricht mit einer Größe von maxFrameSize eine längere Zeit darstellt als maxInterferenceTime, dann:
Bestimmen einer Mindestzeit, waitTime, bis eine zweite Nachricht in einer zweiten Warteschlange zur Übertragung verfügbar werden könnte; und,
falls waitTime größer oder gleich der Differenz zwischen frameTime und maxInterferenceTime ist, dann Übertragen der ersten Nachricht.

10. Verfahren nach Anspruch 1, wobei:
falls die erste Nachricht Nachrichtenunterbrechung nicht unterstützt, dann:
Bestimmen einer Mindestzeit, waitTime, bis eine zweite Nachricht in einer zweiten Warteschlange zur Übertragung verfügbar werden könnte; und,
falls waitTime größer oder gleich der Differenz zwischen frameTime und maxInterferenceTime ist, dann Übertragen der ersten Nachricht.

11. Verfahren nach Anspruch 1, wobei:
falls die Zeit, die zum Übertragen einer der jeweiligen Unternachrichten erforderlich ist, größer ist als maxInterferenceTime, dann:
Bestimmen einer Mindestzeit, waitTime, bis eine zweite Nachricht in einer zweiten Warteschlange zur Übertragung verfügbar werden könnte; und,
falls waitTime größer oder gleich der Differenz zwischen frameTime und maxInterferenceTime ist, dann Übertragen der ersten Nachricht.

12. Verfahren nach einem der Ansprüche 9 bis 11, wobei der Schritt des Bestimmens von waitTime Folgendes umfasst:
Bestimmen, wann genügend Guthaben vorhanden ist, das mit der zweiten Warteschlange assoziiert ist, damit die zweite Nachricht zur Übertragung bereit ist.

13. Verfahren nach einem der Ansprüche 9 bis 11, wobei:
die zweite Warteschlange entweder konfigurierbar ist als:
i) eine offene Warteschlange, in der eine in der zweiten Warteschlange empfangene Nachricht zur Übertragung in dem zeitkritischen Netzwerk auswählbar ist; oder ii) eine geschlossene Warteschlange, in der eine in der zweiten Warteschlange empfangene Nachricht nicht zur Übertragung in dem zeitkritischen Netzwerk auswählbar ist; und
der Schritt des Bestimmens von waitTime Folgendes umfasst:
Bestimmen der Zeit, bis die zweite Warteschlange als offene Warteschlange konfiguriert wird.

14. Vorrichtung, umfassend Mittel, die zum Durchführen des Verfahrens nach einem der vorhergehenden Ansprüche konfiguriert sind.

15. Computerprogramm, das dazu konfiguriert ist, das Verfahren nach einem der Ansprüche 1 bis 13 durchzuführen, wenn das Programm in dem Prozessor eines Computers ausgeführt wird.

## Revendications

1. Procédé de transmission d'un message sur un réseau sensible au temps, le procédé comprenant les étapes suivantes :
recevoir des messages sur plusieurs files d'attente différentes, un message reçu d'une seule file d'attente pouvant être transmis sur le réseau à tout moment ;
déterminer le temps nécessaire à la transmission d'un premier message reçu d'une première file d'attente, frameTime, sur le réseau ;
**caractérisé en ce que** si (612, 614) le temps frameTime est supérieur à une période de temps maximale autorisée prédéterminée pour la transmission d'un seul message au sein du réseau, maxInterferenceTime ; alors
séparer le premier message en deux sous-messages, ou plus ;
déterminer le temps nécessaire à la transmission de chaque sous-message sur le réseau ; et
si (610) le temps nécessaire pour transmettre chaque sous-message respectif est inférieur ou égal à maxInterferenceTime, alors transmettre séquentiellement (611) chaque sous-message sur le réseau à son tour de sorte qu'un deuxième message d'une deuxième file d'attente puisse être transmis entre des sous-messages si nécessaire.

2. Procédé selon la revendication 1, dans lequel la séparation du premier message en deux sous-messages, ou plus, comprend l'application d'une préemption au premier message.

3. Procédé selon la revendication 1 ou la revendication 2, dans lequel :
si frameTime est supérieur à maxInterferenceTime ; alors si le premier message n'est pas déjà préemptable, modifier le premier message de sorte qu'il soit préemptable avant de séparer le premier message en deux, ou plus, sous-messages.

4. Procédé selon l'une quelconque des revendications précédentes, le procédé comprenant en outre l'étape suivante :
si la taille du premier message reçu, frameSize, est supérieure à la taille maximale de message prédéterminée pour le réseau sensible au temps, maxFrameSize, abandonner le premier message ;
où le temps de transmission d'un message de taille maxFrameSize représente un temps plus long que maxInterferenceTime.

5. Procédé selon l'une quelconque des revendications précédentes, le procédé comprenant en outre l'étape suivante :
si le temps frameTime est inférieur à maxInterferenceTime ; alors
transmettre le premier message selon un procédé de sélection normale de transmission dans le réseau sensible au temps.

6. Procédé selon l'une quelconque des revendications précédentes, le procédé comprenant en outre l'étape suivante :
si le premier message ne prend pas en charge la préemption du message, abandonner le premier message.

7. Procédé selon l'une quelconque des revendications précédentes, le procédé comprenant en outre l'étape suivante :
si le temps requis pour transmettre l'un quelconque des sous-messages respectifs est supérieur à maxInterferenceTime, abandonner le premier message.

8. Procédé selon l'une quelconque des revendications précédentes, le procédé comprenant en outre les étapes suivantes :
si le temps nécessaire pour transmettre un ou plusieurs des sous-messages est supérieur ou égal à maxInterferenceTime ; alors
préempter ces un ou plusieurs sous-messages en deux, ou plus, sous-messages ;
déterminer le temps nécessaire à la transmission de chaque sous-sous-sous-message sur le réseau ; et
si le temps nécessaire à la transmission de chaque sous-sous-message sur le réseau est inférieur à maxInterferenceTime, transmettre séquentiellement chaque sous-sous-message et tous les sous-messages à leur tour de sorte qu'un deuxième message d'une deuxième file d'attente puisse être transmis entre des sous-sous-messages, si nécessaire.

9. Procédé selon la revendication 1, dans lequel :
si la taille du premier message reçu, frameSize, est supérieure à une taille maximale de message prédéterminée pour le réseau sensible au temps, maxFrameSize, où le temps d'émission d'un message de taille maxFrameSize représente une durée plus longue que maxInterferenceTime, alors :
déterminer un temps minimum jusqu'à ce qu'un deuxième message sur une deuxième file d'attente devienne disponible pour la transmission, waitTime ; et
si waitTime est supérieur ou égal à la différence entre frameTime et maxInterferenceTime, alors transmettre le premier message.

10. Procédé selon la revendication 1, dans lequel :
si le premier message ne prend pas en charge la préemption des messages, alors :
déterminer un temps minimum jusqu'à ce qu'un deuxième message sur une deuxième file d'attente devienne disponible pour la transmission, waitTime ; et
si waitTime est supérieur ou égal à la différence entre frameTime et maxInterferenceTime, alors transmettre le premier message.

11. Procédé selon la revendication 1, dans lequel :
si le temps requis pour transmettre l'un quelconque des sous-messages respectifs est supérieur à maxInterferenceTime, alors :
déterminer un temps minimum jusqu'à ce qu'un deuxième message sur une deuxième file d'attente devienne disponible pour la transmission, waitTime ; et
si waitTime est supérieur ou égal à la différence entre frameTime et maxInterferenceTime, alors transmettre le premier message.

12. Procédé selon l'une quelconque des revendications 9 à 11, dans lequel la détermination de waitTime comprend l'étape suivante :
déterminer quand le crédit associé à la deuxième file d'attente sera suffisant pour que le deuxième message soit prêt pour transmission.

13. Procédé selon l'une quelconque des revendications 9 à 11, dans lequel :
la deuxième file d'attente est configurable soit comme :
i) une file d'attente ouverte, dans laquelle un message reçu sur la deuxième file d'attente est éligible pour transmission sur le réseau sensible au temps ; soit ii) une file d'attente fermée, dans laquelle un message reçu sur la deuxième file d'attente n'est pas éligible pour transmission sur le réseau sensible au temps ; et
l'étape de détermination de waitTime comprend :
la détermination du temps nécessaire jusqu'à ce que la deuxième file d'attente soit configurée en tant que file d'attente ouverte.

14. Appareil comprenant des moyens configurés pour exécuter le procédé selon l'une quelconque des revendications précédentes.

15. Programme informatique configuré pour exécuter le procédé selon l'une quelconque des revendications 1 à 13 lorsque le programme est exécuté dans le processeur d'un ordinateur.
